# EUROPEAN PATENT APPLICATION

(11) **EP 1 764 265 A1**
(43) Date of publication of application: **21.03.2007**
(21) Application number: 06018987.5
(22) Date of filing: 11.09.2006
(51) Int. Cl.: B60R 1/07, H01H 25/04

(54) **Control device for a rearview mirror of a motor vehicle**

(30) Priority: 14.09.2005 IT TO20050134
(71) Applicant: BITRON S.p.A., 10042 Nichelino (Torino) (IT)
(72) Inventor: Ballatore, Paolo, 12022 Busca CN (IT); Barile, Marco, 12020 Rossana CN (IT)
(74) Representative: Lotti, Giorgio

(57) **Abstract**

Described herein is a control device for governing the rearview mirrors of a motor vehicle, said device being made up of a joystick (3) for actuation by rotation and rocking, a container body (5) provided with a base (7), a rotating sliding element (11) actuated by said joystick (3), a printed circuit set on top of the sliding element (11), on top of said printed circuit there being in turn set a metal contact (23) and a silicone mat (25), which are made in two separate parts.

## Description

The present invention relates to a control device for one or more rearview mirrors of a motor vehicle. In particular, the device is a control of the type made up of a knob (joystick) that is able to rock and rotate. Known to the art are some devices of this type, which present, however, the drawback of requiring a movement (play) upwards of the joystick in order to enable selection of one of the various possibilities of intervention for regulation of the rearview mirrors.

The purpose of the present invention is to provide a control that, by eliminating the movement (play) upwards, will achieve an ergonomic advantage with the possibility of providing greater uniformity of actuation of the various controls provided on the car.

The above purpose is achieved by the present invention, the subject of which is a control device that presents the characteristics of Claim 1.

Further characteristics and advantages will emerge clearly from the ensuing description, with reference to the attached plate of drawings, which are provided purely by way of non-limiting example and in which:

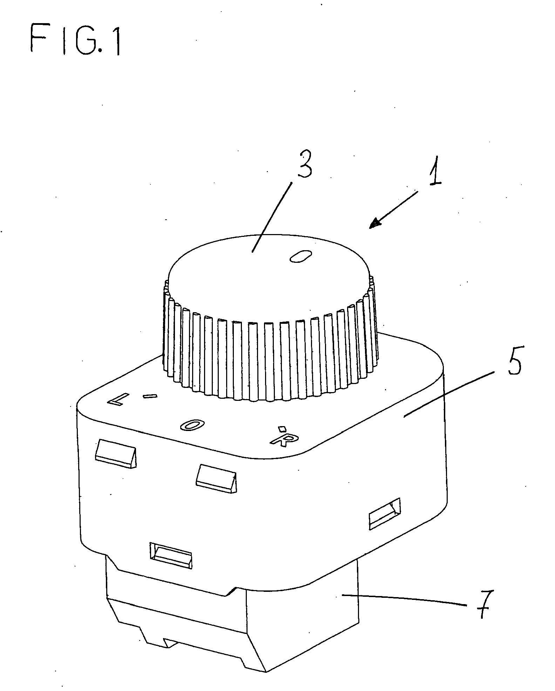

- Figure 1 is a perspective view of the control device according to the invention; and

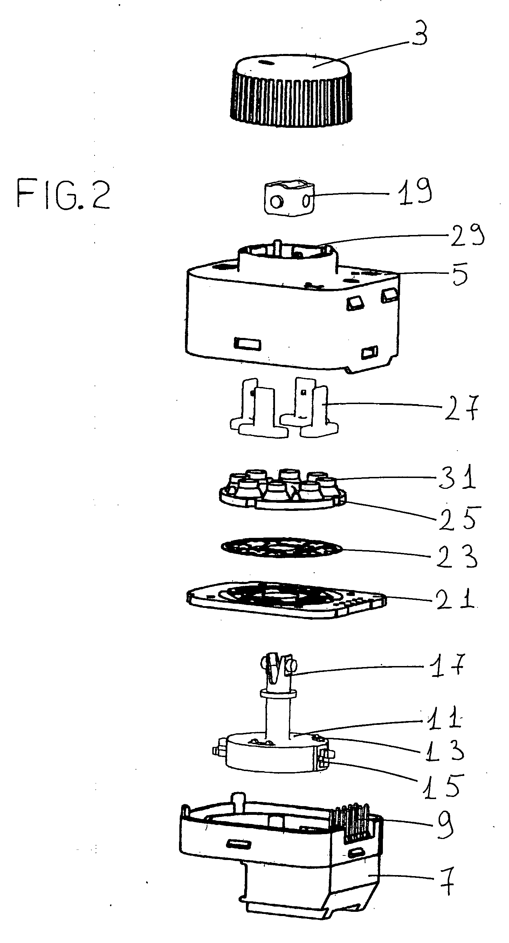

- Figure 2 is an exploded view of the control device of Figure 1.

With reference to the figures, number 1 designates as a whole a control device for governing the functions of the rearview mirrors of a motor vehicle. Said control is provided with a joystick 3 designed to rock and rotate. The movement of rotation has the purpose of enabling selection of the mirror on which to act in order to regulate it. Said regulation is achieved by rocking the joystick to and fro, left and right. The device is moreover made up of an outer body 5 closed at the bottom by a bottom part or base 7, which houses the electrical contacts 9 necessary for connecting the control device to the wiring system of the motor vehicle.

Housed inside the base 7 is a sliding element 11, provided with sliding contacts 13, a positioning stud 15, and corresponding springs (not represented). The sliding element 11 has the function of enabling selection of the mirror that is to be adjusted into the desired position and is connected to the joystick 3 by means of an integral spindle 17, which projects from the top part of the body 5 so as to be connected to a piece 19 for connection between the joystick and the spindle.

Set on top of the sliding element 11 and again inside the body 5 is the printed circuit 21, provided on which are the paths for switching for selection of the function and movement of the reaview mirrors by means of electric motors, and the electronic components necessary for lighting up the symbols located on the body 5 and on the joystick 3. A metal electrical contact 23.having a substantially circular shape is set on top of the printed circuit. Set on top of the contacts is a silicone mat 25, acting on which are four actuating elements 27 set in seats 29 made in the body 5 and actuated by rocking the joystick 3 on the connection piece 19. Said actuating elements consequently enable a suitable actuation of the bellows 31 of the silicone mat 25 converting, as has been said previously, the movement of rocking of the joystick into a vertical movement. This solution with the silicone mat and the separate metal contact in order to have a single snap-action element enables a greater uniformity of actuation of the various controls provided on the motor vehicle.

It remains understood that the shape of the control device may be varied as desired and according to the requirements of the manufacturer, without thereby departing from the sphere of protection of the present invention.

## Claims

1. A control device for governing the rearview mirrors of a motor vehicle, said device being made up of a joystick (3) for actuation by rotation and rocking, a container body (5) provided with a base (7), a rotating sliding element (11) actuated by said joystick (3), a printed circuit set on top of the sliding element (11), on top of said printed circuit there being in turn set a metal contact (23) and a silicone mat (25), actuated by actuating elements (27) pushed by the joystick (3), said control device being **characterized in that** the silicone mat (25) and the metal contact (23) are two separate parts set one (25) on top of the other (23).

2. The control device according to Claim 1, **characterized in that** the metal contact (23) has a substantially circular shape.

3. The control device according to Claim 1, **characterized in that** the actuating elements (27) are inserted in guides (29) made in the body (5) of the device.
